## Europäisches Patentamt
## European Patent Office
## Office européen des brevets

(19)

(11) Veröffentlichungsnummer : **0 119 606**
**B1**

(12)  **EUROPÄISCHE PATENTSCHRIFT**

(45) Veröffentlichungstag der Patentschrift :
29.07.87

(51) Int. Cl.⁴ : **F 28 D   7/14, G 05 D 23/12**

(21) Anmeldenummer : **84102899.6**

(22) Anmeldetag : **16.03.84**

(54) **Wärmetauscher.**

(30) Priorität : **17.03.83 DE 8307786 U**

(43) Veröffentlichungstag der Anmeldung :
**26.09.84 Patentblatt 84/39**

(45) Bekanntmachung des Hinweises auf die Patenterteilung : **29.07.87 Patentblatt 87/31**

(84) Benannte Vertragsstaaten :
**AT BE CH DE FR GB IT LI LU NL SE**

(56) Entgegenhaltungen :
**EP-A- 0 062 691**
**WO-A-83 /014 99**
**DE-A- 2 536 529**
**FR-A- 1 326 896**
**FR-A- 2 494 829**
**US-A- 3 323 585**

(73) Patentinhaber : **Viessmann, Hans, Dr.**
**Im Hain**
**D-3559 Battenberg/Eder (DE)**

(72) Erfinder : **Viessmann, Hans, Dr.**
**Im Hain**
**D-3559 Battenberg/Eder (DE)**

(74) Vertreter : **Wolf, Günter, Dipl.Ing.**
**Patentanwälte Dipl.-Ing. Amthor Dipl.-Ing. Wolf Postfach 70 02 45 An der Mainbrücke 16**
**D-6450 Hanau 7 (DE)**

## Beschreibung

Die Erfindung betrifft einen Wärmetauscher, insbesondere zur Wärmeumsetzung in Fernheizungsanlagen, gemäß Oberbegriff des Hauptanspruches.

Wärmetauscher der genannten Art sind allgemein bspw. aber auch nach der FR-A-24 94 829 bekannt. Beim Gegenstand der FR-A-24 94 829 handelt es sich um einen Gegenstromwärmetauscher der gattungsgemäßen Art, allerdings ohne Thermofühler. Wärmetauscher dieser Art dienen auch dazu, die von der Fernheizung durch das Primärmedium gelieferte Wärme auf das Sekundärmedium zu übertragen, das bspw. zur Hausheizung und/oder Brauchwasserbereitung dient.

Seitens der Fernheizungsbetreiber bestehen bzgl. der Rücklauftemperatur des Primärmediums bestimmte Auflagen und zwar in der Regel dahingehend, daß diese Temperatur unabhängig vom Betriebszustand des Wärmeverbrauchsbereiches bei etwa 30° liegen soll.

Aus diesem Grunde ist die Vorlaufleitung des Primärmediums von Wärmetauschern für Fernheizzwecke mit einem Regelventil versehen, das von einem rücklaufseitig angeordneten Temperaturfühler gesteuert wird. Sofern sich aufgrund geringer Wärmeabnahme eine höhere Temperatur im Primärmediumsrücklauf einstellt, wird das Ventil geschlossen bzw. gedrosselt, um den Primärmediumsvorlauf zu reduzieren bzw. ganz zu schließen. Aus diesen steuerungs- und regeltechnischen Gründen ist es wünschenswert, den Temperaturfühler im unmittelbaren Bereich dort anzuordnen, wo der Primärmediumsrücklauf und der Sekundärmediumsvorlauf zusammentreffen.

Da man bemüht ist, derartige Wärmetauscher möglichst kompakt zu bauen, ist es außerordentlich schwierig, eine geeignete Anordnungsstelle für den Temperaturfühler, die die vorgenannte Bedingung erfüllt, zu finden. Aus diesem Grunde hat man eine separate Meßstelle für den Temperaturfühler vorgesehen, die jedoch zusätzliche Maßnahmen verlangt, um das rücklaufende Primärmedium in diesen Bereich zu bringen. Wollte man, was an sich wünschenswert wäre, eine Mischtemperatur der beiden Medien erfühlen, so wären weitere zusätzliche Maßnahmen erforderlich, um auch das vorlaufende Sekundärmedium an die Meßstelle zu bringen. In Rücksicht auf diesen zusätzlichen Aufwand wurde deshalb auf eine Mischtemperatur fühlung verzichtet, und man hat eine mehr oder weniger träge Regelung in Kauf genommen.

Der Erfindung liegt demgemäß die Aufgabe zugrunde, einen Wärmetauscher der eingangs genannten Art zwecks Messung der Mischtemperatur dahingehend zu verbessern, daß trotz kompakter Bauweise die Meßstelle unmittelbar am Wärmetauscher selbst unterzubringen sein soll und zwar dort, wo die beiden Medien noch gemeinsam durch Wände getrennt aneinander vorbeiströmen.

Diese Aufgabe ist mit einem Wärmetauscher der eingangs genannten Art nach der Erfindung durch das im Kennzeichen des Hauptanspruches Erfaßte gelöst. Vorteilhafte Weiterbildungen ergeben sich nach den Unteransprüchen.

Durch die Rohrerweiterung unmittelbar am vorlaufseitigen Ende des Sekundärmediums bzw. am rücklaufseitigen Ende des Primärmediums, die in der Praxis in Form eines kleinen, noch näher zu beschreibenden Gehäuses ausgebildet wird, besteht die Möglichkeit, den Temperaturfühler unmittelbar in diesem Mischtemperaturbereich des Wärmetauschers anzuordnen, ohne dessen kompakte Bauweise zu beeinträchtigen. Dadurch fallen sämtliche Zusatzmaßnahmen zur Hinführung der zu messenden Medien an eine separate Meßstelle weg ; es kann außerdem die Temperatur unmittelbar am Primärmediumsrücklauf bzw. Sekundärmediumsvorlauf erfühlt werden, wobei durch diese Anordnung nicht separate Temperaturen der beiden Medien gemessen sondern eine Mischtemperatur erfühlt wird.

Der Wärmetauscher wird nachfolgend anhand der zeichnerischen Darstellung eines Ausführungsbeispieles näher erläutert.

Es zeigt schematisch

Figur 1 eine Seitenansicht des Wärmetauschers ;

Figur 2 eine Vorderansicht des Wärmetauschers ;

Figur 3 einen Schnitt durch eine praktische Ausführungsform der Meßstelle des Wärmetauschers ;

Figur 4 im Schnitt eine bauliche Einzelheit und

Figur 5 eine Draufsicht auf den Wärmetauscher.

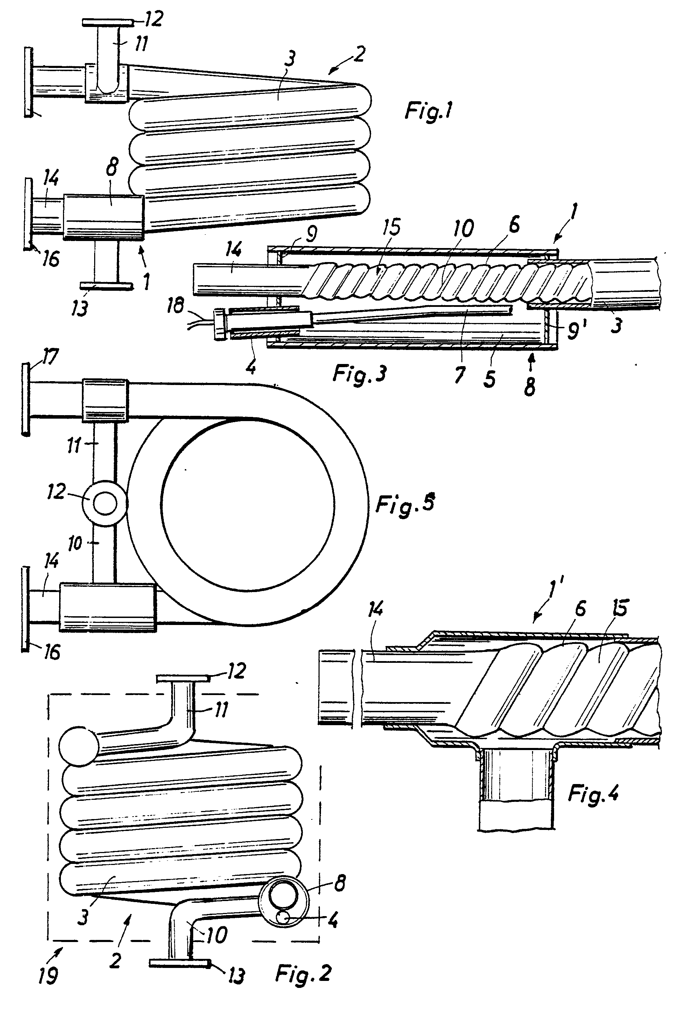

In den Fig. 1 bis 5 sind bezeichnet mit 1 das primärrücklauf- und sekundärvorlaufseitige Ende der Wendel 2, mit 3 das Außenrohr, mit 7 der Temperaturfühler, der in den Innenraum 5 des erweiterten Rohres 3 einragt, das in Form eines zylindrischen Gehäuses 8 ausgebildet ist, mit 6 das Innenrohr, das, abgesehen von glatten Enden 14 in an sich bekannter Weise mit schraubenlinienförmig verbundenen Wänden 15 versehen ist, mit lo der Primärrücklauf- und mit 11 der Primärvorlaufanschluß, die mit entsprechenden Anschlußstutzen 12, 13 versehen sind. Die Anschlußstutzen für das Sekundärmedium sind mit 16, 17 bezeichnet.

Abgesehen von der hier speziell interessierenden Erweiterung des Außenrohres 3 bzw. des Gehäuses 8 bedürfen alle diese Elemente keiner näheren Erläuterung, da insoweit bekannt.

Gemäß Fig. 3 ist die Erweiterung des Außenrohres 3 in Form eines kleinen zylindrischen Gehäuses 8 ausgebildet, aus der erkennbar ist, daß auf der einen Seite das Außenrohr 3 flüssigkeitsdicht angeschlossen an der Stirnwand 9' des Gehäuses 8 endet, das vom Innenrohr 6 durchgriffen wird, das mit seinem glatten Ende 14 flüssigkeitsdicht mit der Stirnwand 9 verbinden ist und auf der anderen Seite aus dem Gehäuse 8 austritt.

An der Stirnwand 9 ist ferner der Temperaturfühlereinsatzstutzen 4 derart angeordnet, daß der dort einzusetzende Temperaturfühler 7 in den Innenraum 5 ragt und sich dabei, wie dargestellt, in unmittelbarer Nachbarschaft zum Innenrohr 6 befindet. Die Leitung 18 des Temperaturfühlers 7 steht dann mit dem nicht dargestellten Ventil für den Primärmediumsvorlauf in funktioneller Verbindung.

Der vom Gehäuse 8 abgehende Primärmediumsrücklaufanschluß lo ist vorteilhaft so angeordnet, daß er koaxial, wie aus Fig. 2,5 erkennbar, zum Primärmediumsvorlaufanschluß 11 steht, wodurch derartige Wärmetauscher, die sich natürlich innerhalb eines wärmeisolierten Umschliessungsgehäuses 19 befinden, gestapelt und fluchtend zueinander hintereinander geschaltet werden können. Nur der Vollständigkeit halber ist in Fig. 4 im Schnitt das primärvorlauf- und sekundärrücklaufseitige Ende 1' in seiner konstruktiven Gestaltung verdeutlicht.

## Patentansprüche

1. Wärmetauscher, insbesondere zur Wärmeumsetzung in Fernheizungsanlagen, bestehend aus einer Doppelrohrwendel mit jeweils separaten Vor- und Rücklaufanschlüssen für die Durchleitung eines Primär- und eines Sekundärmediums im Gegenstrom, wobei das Außen- und Innenrohr einen engen, im Querschnitt ringförmigen Durchlaufspalt für das Primärmedium einschließen, das mittels eines von einem rücklaufseitig angeordneten Temperaturfühler betätigten Regelventiles gesteuert wird, dadurch gekennzeichnet, daß am primärrücklauf- und sekundärvorlaufseitigen Ende (1) der Wendel (2) das Außenrohr (3) erweitert ausgebildet und mit einem Temperaturfühlereinsatzstutzen (4) versehen und in diesem, in den Innenraum (5) des erweiteren Außenrohres (3) einragend, sich unmittelbar benachbart zum den Innenraum (5) flüssigkeitsdicht durchgreifenden Innenrohr (6) erstreckend, der Temperaturfühler (7) angeordnet ist.

2. Wärmetauscher nach Anspruch 1, dadurch gekennzeichnet, daß das erweiterte Außenrohr (3) in Form eines zylindrischen Gehäuses (8) ausgebildet ist, in dem auf der einen Seite das Außenrohr (3) flüssigkeitsdicht angeschlossen endet, wobei das das Gehäuse (8) durchgreifende Innenrohr (6) auf der anderen Seite flüssigkeitsdicht die Stirnwand (9) des Gehäuses (8) durchgreift.

3. Wärmetauscher nach Anspruch 1 und/oder 2, dadurch gekennzeichnet, daß am Gehäuse (8) bzw. am erweiterten Außenrohr (3) der Primärrücklaufanschluß (10) angeordnet ist.

4. Wärmetauscher nach einem der Ansprüche 1 bis 3, dadurch gekennzeichnet, daß der vom Gehäuse (8) bzw. vom erweiterten Außenrohr (3) abgehende Primärrücklauf (10) — und der Primärvorlaufanschluß (11) mit ihren Anschlußstutzen (12, 13) koaxial angeordnet sind.

5. Wärmetauscher nach einem der Ansprüche 1 bis 4, dadurch gekennzeichnet, daß das Innenrohr (6) in an sich bekannter Weise, abgesehen von glatten Enden (14), mit schraubenlinienförmig verbundenen Wänden (15) versehen ist.

## Claims

1. Heat exchanger, especially for heat conversion in district heating systems, consisting of a double-tube coil with respective separate forward-flow and return-flow connections for conveying a primary medium and a secondary medium in countercurrent, the outer tube and inner tube enclosing a narrow passage gap of annular cross-section for the primary medium which is controlled by means of a regulating valve actuated by a temperature sensor located on the return-flow side, characterised in that the outher tube (3) is widened at the end (1) of the coil (2) located on the same side as the primary return flow and secondary forward flow and is equipped with a temperature-sensor insert connector (4), and the temperature sensor (7) is arranged in the latter so as to project into the interior (5) of the widened outer tube (3) and extend directly adjacent to the inner tube (6) passing through the interior (5) in a liquid-tight manner.

2. Heat exchanger according to claim 1, characterised in that the widened outer tube (3) is in the form of a cylindrical housing (8), in which the outer tube (3) ends on one side so as to be connected in a liquid-tight manner, and the inner tube (6) extending through the housing (8) passes through the end wall (9) of the housing (8) on the other side in a liquid-tight manner.

3. Heat exchanger according to claim 1 and/or 2, characterised in that the primary return-flow connection (10) is arranged on the housing (8) or on the widened outer tube (3).

4. Heat exchanger according to one of claims 1 to 3, characterised in that the primary return-flow connection (10) extending from the housing (8) or from the widened outer tube (3) and the primary forward-flow connection (11) are arranged with their connecting pipes (12, 13) coaxial relative to one another.

5. Heat exchanger according to one of claims 1 to 4, characterised in that, in a way known per se, the inner tube (6), with the exception of smooth ends (14), is equipped with walls (15) connected helically.

## Revendications

1. Echangeur de chaleur, notamment pour échanges de chaleur dans des installations de chauffage collectif, constitué d'un serpentin à double tube avec des raccords respectifs d'aller et de retour pour le passage à contre-courant d'un fluide primaire et d'un fluide secondaire, et le tube extérieur et le tube intérieur limitant un intervalle étroit, à section annulaire, pour le passage du fluide primaire, qui est commandé au moyen d'une vanne de réglage actionnée par une sonde de température disposée côté retour, caractérisé en ce que le tube extérieur (3) est réalisé avec un élargissement à l'extrémité (1) du serpentin (2) du côté du retour primaire et de l'aller secondaire et, est muni d'une tubulure (4) d'introduction d'une sonde de température, la sonde de température (7) étant disposée dans cette tubulure, en pénétrant dans le volume intérieur (5) du tube extérieur élargi (3) et en s'étendant jusqu'au voisinage immédiat du tube intérieur (6) traversant le volume intérieur (5) de façon étanche au fluide.

2. Echangeur de chaleur selon la revendication 1, caractérisé en ce que le tube extérieur élargi (3) est réalisé sous forme d'une enveloppe cylindrique (8), dans laquelle, d'un côté, le tube extérieur (3) est raccordé de façon étanche au fluide, le tube intérieur (6) qui traverse l'enveloppe (8) traversant, de l'autre côté, la paroi frontale (9) de l'enveloppe (8) de façon étanche au fluide.

3. Echangeur de chaleur selon la revendication 1 et/ou la revendication 2, caractérisé en ce que le raccord de retour primaire (10) est disposé sur l'enveloppe (8) ou sur le tube extérieur élargi (3).

4. Echangeur de chaleur selon l'une des revendications 1 à 3, caractérisé en ce que le retour primaire (10) partant de l'enveloppe (8) ou du tube extérieur (3) élargi et le raccord d'aller primaire (11) sont disposés de façon coaxiale à leurs tubulures de raccord (12, 13).

5. Echangeur de chaleur selon l'une des revendications 1 à 4, caractérisé en ce que le tube intérieur (6) est, de façon en soi connue et abstraction faite d'extrémités lisses (14), muni de parois (15) assemblées en forme d'hélices.

Fig.1

Fig.3

Fig.5

Fig.4

Fig.2